# EUROPEAN PATENT SPECIFICATION

(11) **EP 4 148 655 B1**
(45) Date of publication and mention of the grant of the patent: **01.01.2025**
(21) Application number: 21862138.1
(22) Date of filing: 27.08.2021
(51) Int. Cl.: G06Q 50/40, H01M 10/42, B60L 53/65, B60L 53/64, B60L 53/66, B60L 53/68, B60L 58/16, G06Q 10/20, G06Q 30/02, G06Q 40/08, G06Q 50/10, H01M 10/54

(54) **INTEGRATED BATTERY MANAGEMENT PLATFORM SERVICE SYSTEM AND METHOD**
DIENSTSYSTEM UND -VERFAHREN FÜR INTEGRIERTE BATTERIEVERWALTUNGSPLATTFORM
SYSTÈME ET PROCÉDÉ DE SERVICE DE PLATEFORME DE GESTION DE BATTERIE INTÉGRÉS

(30) Priority: 27.08.2020 KR 20200108826
(43) Date of publication of application: 15.03.2023
(73) Proprietor: LG Energy Solution, Ltd., Seoul 07335 (KR)
(72) Inventor: KIM, Hyun, Daejeon 34122 (KR); KANG, Chang-Beom, Daejeon 34122 (KR); KIM, Dong-Myung, Daejeon 34122 (KR); KIM, Jong-Hyun, Daejeon 34122 (KR); KIM, Jin-Suk, Daejeon 34122 (KR); KIM, Hyung-Sik, Daejeon 34122 (KR); SHIN, Jang-Hwan, Daejeon 34122 (KR); AHN, Hyoung Jun, Daejeon 34122 (KR); LEE, Dal-Hoon, Daejeon 34122 (KR)
(74) Representative: BCKIP Part mbB
(86) International application number: PCT/KR2021/011554
(87) International publication number: WO 2022/045842

(56) References cited:
- EP-A1- 3 357 738
- JP-A- 2013 521 707
- JP-A- 2014 063 617
- JP-A- 2014 063 617
- JP-B2- 5 500 252
- KR-A- 20110 061 890
- KR-B1- 101 555 322
- KR-B1- 101 555 322
- US-A1- 2013 090 872

## Description

### TECHNICAL FIELD

The present disclosure relates to a platform service system for integrated battery management and a method therefor, and more specifically, to a platform service system capable of synthetically managing a SOH (State Of Health), a reuse grade and a residual value of a battery during an entire use cycle of the battery and capable of providing various information services to a client, other server or other system side, and a method therefor.

The present application claims priority to Korean Patent Application No. 10-2020-0108826 filed on August 27, 2020 in the Republic of Korea.

### BACKGROUND ART

Due to the environmental pollution problem caused by the use of fossil fuels, eco-friendly electric vehicles are in the spotlight. An electric vehicle is a vehicle to which a battery and a motor are mounted instead of an engine, and the electric vehicle runs by driving the motor with the power supplied from the battery.

In the electric vehicle, the performance of the battery is directly related to the driving performance of the electric vehicle. Therefore, if the performance of the battery falls below a threshold, the battery should be replaced. In general, when the full charge capacity of a battery falls below 80% of the initial full charge capacity, it is judged that the battery needs to be replaced.

Meanwhile, batteries used in electric vehicles contain expensive materials. For example, a lithium secondary battery including a Ni-Co-Mn-based positive electrode active material contains a large amount of Li, Ni, Co and Mn. All of these elements are expensive raw materials, and in particular, Co is an expensive raw material accounting for 20% of the battery manufacturing cost. Therefore, various studies are being conducted to reuse batteries replaced in the electric vehicles, namely used batteries.

Used batteries have unsuitable performance for use in electric vehicles, but they have no problem to be reused as batteries for ESS (Energy Storage System) unless the charging capacity is remarkably low. This is because the battery used in ESS does not require high performance comparable to that of the battery used in electric vehicles. In other words, although only the capacity is sufficient for the ESS, a low-output battery may be used.

Meanwhile, batteries that are not suitable for use in ESS can no longer be reused due to safety issues. A battery whose performance has significantly deteriorated may easily come into an overcharged or overdischarged state, which may cause problems such as thermal runaway. Therefore, it is desirable to classify the corresponding battery as a discarded battery and entrust it to a resource recovery company to recycle the raw materials contained in the battery.

Like most goods, electric vehicles can be transacted on the second-hand market. The price of used goods is determined by the residual value, and the residual value is affected by the use history of the goods. That is, even if the period of use is the same, the residual value decreases as aging increases.

An important factor in determining the residual value of an electric vehicle is the residual value of the battery, which is a key component. However, there is still no model that can reliably evaluate the residual value of the battery according to a uniform standard. Therefore, the price of a used electric vehicle is determined in consideration of mileage, accident history, and management status of the vehicle, just like general vehicles.

The evaluation of the residual value for electric vehicle batteries is also required when purchasing an insurance. This is because the insurance price of a vehicle is calculated by considering the residual value of the vehicle along with the driving and accident history of the driver. Therefore, the evaluation of the residual value of the battery is an important factor to be considered when purchasing an insurance for used electric vehicles.

The residual value of the battery may be quantitatively evaluated using a factor called SOH (State Of Health). That is, the residual value of the battery may be evaluated as being proportional to the SOH.

The SOH is calculated using a parameter that shows a tendency to change slowly depending on the use cycle of the battery. That is, the SOH may be quantitatively calculated by computing the ratio of the MOL (Middle Of Life) parameter based on the BOL (Beginning Of Life) parameter of the battery.

The parameters commonly considered for SOH calculation include a full charge capacity and an internal resistance of the battery, and recently, electrochemical parameters such as diffusion coefficient of electrodes and Coulomb efficiency are also considered.

JP2014 063617 A relates to a device for rating a residual value of a storage battery that includes: equivalent history identification means; probability distribution calculation means; residual value calculation means; and rating means. The equivalent history identification means identifies an equivalent history of the storage battery in a test condition which is calculated from deterioration test data measured for each test condition with respect to the storage battery and a state amount of the inside of the storage battery, and is equivalent to the past use history of the storage battery.

KR 101 555 322 B1 relates to a system and a method for recycling a battery. The charging/discharging system for recycling a battery comprises: a thermal imaging camera to measure heat generated when charging/discharging the battery; a user interface unit to output information about the heat measured by the thermal imaging camera, and receive a command for charging or discharging the battery; an inverter to operate in a charging mode to convert an alternating current voltage of a system into a direct current voltage or in a discharging mode to convert a direct current voltage outputted from a converter into the alternating current voltage of the system according to the command for charging or discharging from the user interface unit or a resistance discharger; the converter to operate in a charging mode to convert the direct current voltage from the inverter into a charging voltage of the battery or in a discharging mode to convert an output voltage of the battery into the direct current voltage according to the command for charging or discharging from the user interface unit or the resistance discharger; and the resistance discharger which measures a module voltage of the battery disassembled into module units, classifies each module as re-manufacturing or recycling based on the measured module voltage, and classifies the module classified as re-manufacturing as electric vehicle use or energy storage system (ESS) use based on a state of health (SOH) of the module unit battery.

US 2013/090872 relates to a method of reusing a battery, a battery management system, a battery management apparatus, and an information communication terminal apparatus, wherein, upon retrieving batteries mounted on vehicles, methods of handling the retrieved batteries can be determined at low cost. Measurement data of each of a plurality of stacks constituting a battery pack are transmitted to a data station. The data station stores the received measurement data in a history information storage unit as history information. When history information of a battery pack mounted on a scrapped vehicle is not stored in the history information storage unit of the data station, that battery pack is subjected to recycle processing. When history information thereof is stored in the history information storage unit of the data station, a method of reusing the battery pack is determined on the basis of the history information.

EP3357738 A1 relates to a battery replacement assisting system that includes a server configured to determine, from a plurality of battery packs including a recycled battery pack, a battery pack serving as a replacement candidate for a battery pack mounted on the vehicle.

### DISCLOSURE

### Technical Problem

The present disclosure is designed to solve the problems of the related art, and therefore the present disclosure is directed to providing a platform service system, which may synthetically manage a SOH and a reuse grade of a battery during an entire use cycle of the battery and provide various information services to a client, other server, or other system, and a method therefor.

The present disclosure is also directed to providing a platform service system, which may reliably evaluate and guarantee a residual value of an electric vehicle battery as well as build a reliable reuse model for an electric vehicle battery, and a method therefor.

### Technical Solution

In one aspect of the present disclosure, there is provided a platform service system according to claim 1.

Preferably, the predefined reuse grade information for each SOH may define a reuse grade for each SOH region. For example, the reuse grade may include a used car reuse grade, an ESS (Energy Storage System) reuse grade and a resource recovery grade.

Preferably, the reuse company management system may be an ESS management system or a resource recovery management system.

According to an embodiment, the SOH management module may be configured to calculate a SOH of the battery from new battery characteristic data stored in the battery characteristic data DB and accumulatively store the SOH in the SOH history DB, and the reuse grade management module may be configured to determine a reuse grade corresponding to a latest SOH, compare the reuse grade with a previous reuse grade, and transmit reuse grade change information to the client through the network when the reuse grade is changed.

In the present disclosure, the client may be a program installed in a battery diagnosis device or a user terminal.

According to another embodiment, the data management module may be configured to periodically collect battery characteristic data containing a voltage profile and/or a current profile according to the SOC of a reuse battery from an ESS management system through the network and store the battery characteristic data in the battery characteristic data DB to be matched with the battery identification code of the reuse battery. In addition, the SOH management module may be configured to calculate a current SOH of the reuse battery by analyzing the battery characteristic data of the reuse battery and store the current SOH in the SOH history DB to be matched with the battery identification code of the reuse battery. In addition, the reuse grade management module may be configured to receive a reuse grade calculation request from the ESS management system through the network along with the battery identification code of the reuse battery, determine a current SOH by inquiring the SOH history DB using the battery identification code of the reuse battery, determine a reuse grade corresponding to the current SOH with reference to the predefined reuse grade information for each SOH and store the reuse grade in the reuse grade management DB, and transmit the information about the reuse grade to the ESS management system.

According to still another embodiment, the SOH management module may be configured to calculate a SOH of the battery from new battery characteristic data stored in the battery characteristic data DB and accumulatively store the SOH in the SOH history DB. In addition, the reuse grade management module may be configured to determine a reuse grade corresponding to a latest SOH, compare the reuse grade with a previous reuse grade, and transmit reuse grade change information to the ESS management system through the network when the reuse grade is changed.

According to still another embodiment, the platform service system according to the present disclosure may further comprise a residual value management module configured to receive a battery residual value evaluation request from a battery transaction system or an insurance company system through the network along with the battery identification code, determine a current SOH of the battery by inquiring the SOH history DB using the battery identification code, determine a battery residual value with reference to predefined residual value information for each SOH, and transmit the battery residual value to the battery transaction system or the insurance company system.

Preferably, the residual value management module may be configured to store transaction charging information containing an identification code of the battery transaction system or the insurance company system to which the battery residual value is transmitted, a time stamp representing transmission time, and a charging fee in a charging DB.

In another aspect of the present disclosure, there is also provided a platform service method according to claim 11.

Preferably, the predefined reuse grade information for each SOH may define a reuse grade for each SOH region. In this case, the reuse grade may include a used car reuse grade, an ESS reuse grade and a resource recovery grade.

According to another embodiment, the platform service method according to the present disclosure may further comprise calculating a latest SOH of the battery from new battery characteristic data stored in the battery characteristic data DB and accumulatively store the latest SOH in the SOH history DB; and determining a reuse grade corresponding to the latest SOH, comparing the reuse grade with a previous reuse grade, and transmitting reuse grade change information to the client through the network when the reuse grade is changed.

According to still another embodiment, the platform service method according to the present disclosure may further comprise periodically collecting battery characteristic data containing a voltage profile and/or a current profile according to the SOC of a reuse battery from an ESS management system through the network and storing the battery characteristic data in the battery characteristic data DB to be matched with the battery identification code of the reuse battery; calculating a current SOH of the reuse battery by analyzing the battery characteristic data of the reuse battery and storing the current SOH in the SOH history DB to be matched with the battery identification code of the reuse battery; and receiving a reuse grade calculation request from the ESS management system through the network along with the battery identification code of the reuse battery, determining a current SOH by inquiring the SOH history DB using the battery identification code of the reuse battery, determining a reuse grade corresponding to the current SOH with reference to the predefined reuse grade information for each SOH and storing the reuse grade in the reuse grade management DB, and transmitting the information about the reuse grade to the ESS management system.

According to still another embodiment, the platform service method according to the present disclosure may further comprise receiving a battery residual value evaluation request from a battery transaction system or an insurance company system through the network along with the battery identification code; determining a current SOH of the battery by inquiring the SOH history DB using the battery identification code; and determining a battery residual value with reference to predefined residual value information for each SOH, and transmitting the battery residual value to the battery transaction system or the insurance company system.

According to still another embodiment, the platform service method according to the present disclosure may further comprise storing transaction charging information containing an identification code of the battery transaction system or the insurance company system to which the battery residual value is transmitted, a time stamp representing transmission time, and a charging fee in a charging DB.

### Advantageous Effects

According to the present disclosure, by providing an integrated management model for the reuse of a battery mounted in an electric vehicle, the residual value may be utilized to the maximum from the time when the battery is produced until it is discarded. In addition, since the platform service system estimates the SOH for a battery that comes into a reuse stage and continuously manages the reuse grade, it is possible to perform integrated management throughout the entire use cycle of the battery. In addition, since the SOH is managed throughout the entire use cycle of the battery by the platform service system, the reliability and accuracy of the battery residual value calculated from the SOH may be improved. In addition, a used electric vehicle transaction market may be activated by utilizing the battery residual value calculated based on accurate SOH information for transaction of used batteries or calculation of insurance premiums for used electric vehicles. In addition, the present disclosure may implement a new business concept of battery warranty service.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a block diagram schematically showing the configuration of a platform service system for integrated battery management according to an embodiment of the present disclosure.
FIG. 2 is a flowchart for specifically illustrating a control logic performed by a data management module according to an embodiment of the present disclosure.
FIG. 3 is a flowchart for specifically illustrating a control logic performed by a SOH management module according to an embodiment of the present disclosure.
FIG. 4 is a flowchart for specifically illustrating a control logic performed by a reuse grade management module according to an embodiment of the present disclosure.
FIG. 5 is a flowchart for specifically illustrating a control logic performed by a reuse tracking management module according to an embodiment of the present disclosure.
FIG. 6 is a flowchart for specifically illustrating a process of providing a reuse grade change notification service by the reuse grade management module according to an embodiment of the present disclosure.
FIG. 7 is a flowchart for specifically illustrating a process of evaluating and providing a residual value of a battery by the residual value management module according to an embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

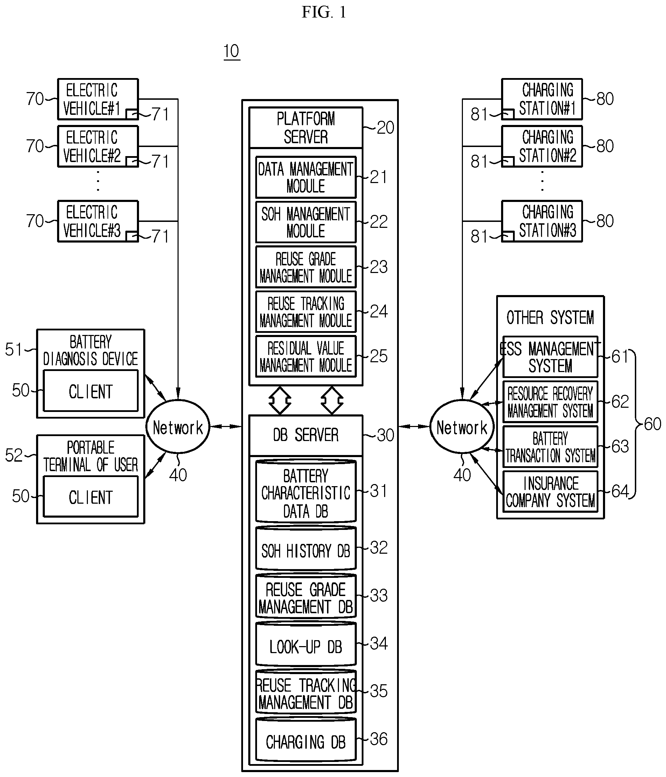

FIG. 1 is a block diagram schematically showing the configuration of a platform service system 10 for integrated battery management according to an embodiment of the present disclosure.

Referring to FIG. 1, the platform service system 10 for integrated battery management according to an embodiment of the present disclosure includes a platform server 20 and a DB server 30.

The platform service system 10 is connected to a client 50 or other system 60 through a network 40 to transmit and receive data.

The client 50 is a program installed in a computer device and is developed to use various services provided by the platform server 20. The function of the client 50 will be described in detail later.

The client 50 may be installed in a battery diagnosis device 51 or in a portable terminal 52 of a user of an electric vehicle 70. The battery diagnosis device 51 is a computer terminal operated by a company that requires battery inspection, such as an electric vehicle maintenance company and a battery distribution company. The battery diagnosis device 51 may be an OBD (On-Board Diagnostics) device, and the portable terminal 52 of the user may be a smartphone or a tablet PC. However, the present disclosure is not limited by the type of device in which the client 50 is installed.

Other system 60 may be an ESS management system 61, a resource recovery management system 62, a battery transaction system 63, or an insurance company system 64.

The network 40 includes a wired/wireless communication network supporting Internet service, and any communication network capable of providing Internet service in a wired network and/or mobile environment is included in the category of the network 40.

The network 40 may include a wired/wireless communication network provided by one network operator as well as a wired/wireless communication network of another network operator through which data passes when two or more communication objects transmit and receive data. The communication object may be a client, a server, a device, or a system that may transmit and receive data through the network 40.

The platform service system 10 for integrated battery management may also be connected to a battery management device 71 mounted in the electric vehicle 70 or a charging control device 81 of a charging station 80 through the network 40 to transmit and receive data.

A network node to which the battery management device 71 and the charging control device 81 are connected may be a wireless network node or a wired network node.

The wireless network node may be a short-range wireless network node supporting communication protocols such as Wi-Fi, Bluetooth and ZigBee, or a communication base station node of a mobile communication service provider. However, the present disclosure is not limited by the type of the network node.

First, the DB server 30 will be described.

The DB server 30 may include a battery characteristic data DB 31. The battery characteristic data DB 31 stores battery characteristic data containing a voltage profile and/or a current profile according to the SOC (State Of Charge) of the battery.

The voltage profile and the current profile include data sets representing changes in voltage or current for each SOC of the battery.

Preferably, the battery characteristic data may be stored and managed to be distinguished by a battery identification code. The battery identification code may include a battery model code and a battery serial number code.

The DB server 30 may also include a SOH history DB 32. The SOH history DB 32 stores the SOH of the battery determined at multiple time points. Preferably, the SOH is stored to be distinguished by the battery identification code, and a time stamp indicating storage time of the information (e.g., year/month/day/hour/minute/second) may be stored together so that the change history of the SOH may be easily identified.

The DB server 30 may also include a reuse grade management DB 33. The reuse grade management DB 33 stores information about a reuse grade of the battery. The reuse grade is determined according to the SOH region of the battery. The information about the reuse grade is stored to be distinguished by the battery identification code. The reuse grade information may be stored along with a time stamp so that its change history may be easily identified.

The DB server 30 may also include a look-up DB 34. The look-up DB 34 may store the reuse grade information for each SOH. The reuse grade information for each SOH is stored to be distinguished according to the battery model code. In one example, the reuse grade information for each SOH may be a look-up table capable of mapping a corresponding reuse grade by using the battery model code and the SOH. The look-up DB 34 may also store residual value information for each SOH. The residual value information for each SOH is stored to be distinguished according to the battery model code. In one example, the residual value information for each SOH may be a look-up table capable of mapping a corresponding residual value of the battery by using the battery model code and the SOH.

The DB server 30 may also include a reuse tracking management DB 35. The reuse tracking management DB 35 stores reuse tracking information to track where a used battery is being reused during the entire use cycle of the battery. Preferably, the reuse tracking information includes an identification code of a battery reuse node, a battery identification code used in the corresponding node, and a time stamp indicating when use is started in the corresponding node. The battery reuse node may be a battery reuse company, for example, a used battery distribution company, an ESS company, or a resource recovery company.

The DB server 30 also includes a charging DB 36. The charging DB 36 may store charging information for information inquiry when paid information inquiry is requested by an external client 50 or other system 60. The charging information may include an identification code of the external client 50 or other system 60 that has requested the information inquiry, a time stamp indicating the time when the transaction is made for the information inquiry, and charge information charged according to the charging policy.

The aforementioned DBs 31 to 36 may be constructed and managed as a commercialized hierarchical database, a network database, a relational database, a database based on a file system, and the like. However, it is obvious to those skilled in the art that the present disclosure is not limited by the structure of the DB or the commercial technology used for constructing the DB.

Next, the configuration of the platform server 20 will be described.

The platform server 20 is a server computer that executes various control logics necessary in the process of providing an integrated battery management platform service according to an embodiment of the present disclosure.

The platform server 20 may include a data management module 21. The data management module 21 collects battery characteristic data containing a voltage profile and/or a current profile according to the SOC of the battery from battery management devices 71 mounted to a plurality of electric vehicles 70 through the network 40, and stores the battery characteristic data in the characteristic data DB 31 in conjunction with the DB server 30.

Preferably, the battery management device 71 transmits the battery identification code together with the battery characteristic data. Accordingly, the data management module 21 may store the battery characteristic data in the battery characteristic data DB 31 to be matched with the battery identification code.

Optionally, the battery characteristic data may further include a temperature profile according to the SOC of the battery.

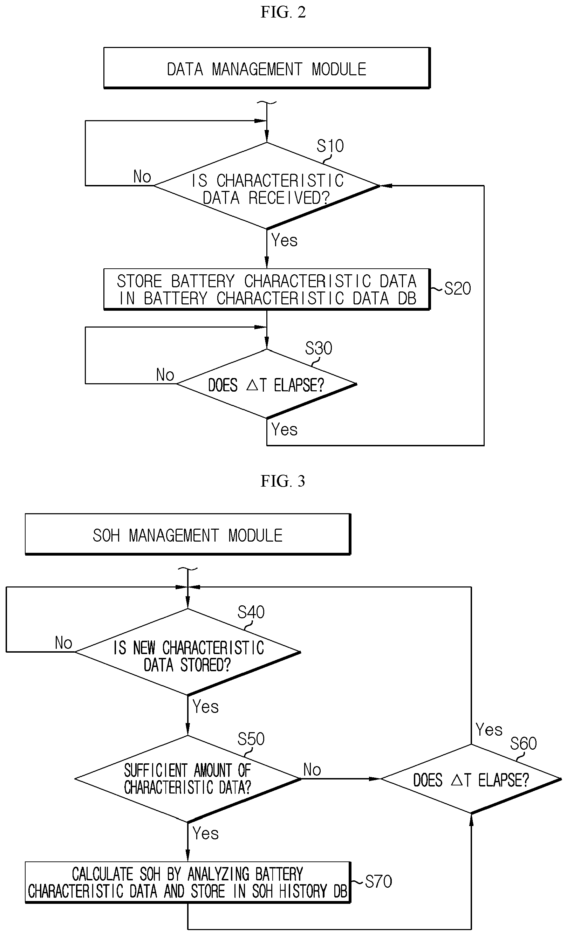

FIG. 2 is a flowchart for specifically illustrating a control logic performed by the data management module 21 according to an embodiment of the present disclosure.

Referring to FIG. 2, when the service is started, in Step S10, the data management module 21 determines whether the battery characteristic data and the battery identification code are received through the network 40. The battery characteristic data and the battery identification code may be transmitted from the battery management device 71 included in the electric vehicle 70 or the charging control device 81 of the charging station 80.

If it is checked that new characteristic data is received, in Step S20, the data management module 21 stores the battery characteristic data in the battery characteristic data DB 31 along with a time stamp to be matched with the battery identification code in conjunction with the DB server 30.

Also, in Step S30, the data management module 21 determines whether a time period △T has elapsed. If the data management module 21 determines that △T has elapsed, the process returns to Step S10 to check again whether or not the battery identification code and battery characteristic data are newly received. Accordingly, Steps S10 to S20 are repeated whenever the time period △T elapses. By doing so, in the battery characteristic data DB 31, characteristic data of batteries mounted to a plurality of electric vehicles 70 are collected and accumulatively recorded along with time stamps.

The platform server 20 also includes a SOH management module 22. The SOH management module 22 may calculate a current SOH of the battery by analyzing the battery characteristic data stored in the battery characteristic data DB 31 and store the current SOH in the SOH history DB 32 along with a time stamp to be matched with the battery identification code in conjunction with the DB server 30. The SOH management module 22 may independently calculate the SOH for each battery and store the SOH in the SOH history DB 32. Preferably, the battery characteristic data used when calculating the current SOH is the most recently collected data based on a current time point.

FIG. 3 is a flowchart for specifically illustrating a control logic performed by the SOH management module 22 according to an embodiment of the present disclosure.

Referring to FIG. 3, when the service is started, in Step S40, the SOH management module 22 determines whether the battery characteristic data is newly stored by inquiring the battery characteristic data DB 31 in conjunction with the DB server 30.

If it is determined that new battery characteristic data is stored, in Step S50, the SOH management module 22 determines whether the amount of battery characteristic data is sufficient. This is because at least a certain amount of data is required to accurately calculate the SOH. For example, the SOH management module 22 determines whether a SOC region in which the current profile and/or voltage profile is measured is equal to or greater than a preset width, for example 60%. The width of the SOC region may be increased or decreased in consideration of the reliability of the SOH estimation result and the computational load.

If it is determined that a sufficient amount of battery characteristic data is newly stored, in Step S70, the SOH management module 22 analyzes the new battery characteristic data to determine the SOH, and stores the SOH in the SOH history DB 32 along with a time stamp to be matched with the battery identification code. Meanwhile, if the amount of battery characteristic data is not sufficient, in Step S60, the SOH management module 22 determines whether the time period ΔT has elapsed. If ΔT has elapsed, the SOH management module 22 returns the process to Step S40 and repeats the above-described steps again. Therefore, the SOH management module 22 may repeat the process of determining the SOH when the amount of new battery characteristic data is sufficient and storing the SOH in the SOH history DB 32 along with a time stamp to be matched with the battery identification code, whenever ΔT elapses.

In the present disclosure, the SOH may be determined using known techniques.

For example, the SOH management module 22 may determine a partial charge capacity by counting the current in a preset SOC region by using the current profile included in the battery characteristic data, and determine the SOH by comparing the partial charge capacity with an initial partial charge capacity calculated in the same SOC region. Since the partial charge capacity calculated in the same SOC region decreases as the battery is degraded, the ratio of a current partial charge capacity to the initial partial charge capacity may be determined as SOH. The initial partial charge capacity of each battery model may be predefined and recorded in the look-up DB 34. The SOH management module 22 may determine the SOH by looking-up the initial partial charge capacity of the corresponding battery model from the look-up DB 34 using the battery model code included in the battery identification code.

As another example, the SOH management module 22 may calculate an I-V profile by a linear regression method using the current profile and the voltage profile included in the battery characteristic data, determine the slope of the I-V profile as a current resistance value of the battery, and determine the SOH by comparing the current resistance value with an initial resistance value. Since the resistance value of the battery increases as the battery is degraded, the ratio of the initial resistance value to the current resistance value may be determined as the SOH of the battery.

As still another example, the SOH management module 22 may determine the SOH by using an adaptive filter that receives the current profile and the voltage profile included in the battery characteristic data and outputs the SOH.

Preferably, the adaptive filter may be a Kalman filter or an extended Kalman filter. The adaptive filter may be derived from a battery model. The battery model may be an equivalent circuit model or an electrochemical model.

The SOH determination method using the extended Kalman filter is disclosed in Korean Patent Publication No. 2007-0074621, which may be incorporated herein as a part of the present disclosure.

The disclosed method is a method capable of determining a SOH from voltage, current and temperature of a battery using an extended Kalman filter. In an embodiment in which the corresponding method is applied to the present disclosure, the battery characteristic data may further include a temperature profile measured according to the SOC of the battery.

The platform server 20 may further include a reuse grade management module 23.

The reuse grade management module 23 may receive a reuse grade calculation request from the client 50 through the network 40 along with a battery identification code.

The reuse grade management module 23 may also determine a current SOH of the battery by inquiring the SOH history DB 32 through the DB server 30 using the battery identification code. The current SOH is determined with reference to the time stamp information. That is, the most recently stored SOH corresponds to the current SOH of the battery.

The reuse grade management module 23 may also determine a reuse grade corresponding to the current SOH with reference to predefined reuse grade information for each SOH.

The reuse grade management module 23 may also store the reuse grade corresponding to the current SOH in the reuse grade management DB 33 along with the time stamp to be matched with the battery identification code in conjunction with the DB server 30.

The reuse grade management module 23 may also transmit the determined reuse grade to the client 50 through the network 40.

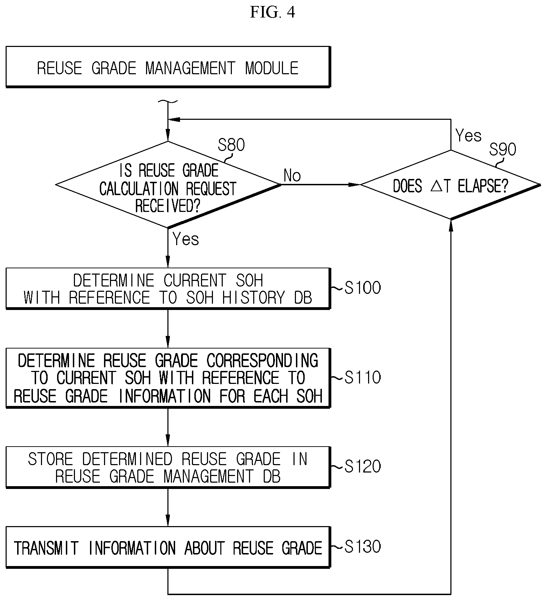

FIG. 4 is a flowchart for specifically illustrating a control logic performed by the reuse grade management module 23 according to an embodiment of the present disclosure.

Referring to FIG. 4, in Step S80, the reuse grade management module 23 determines whether a calculation request regarding the battery reuse grade is received from the client 50 through the network 40. The calculation request is received along with the battery identification code.

If it is determined that the calculation request for the battery reuse grade is received, in Step S100, the reuse grade management module 23 may determine a current SOH of the battery by inquiring the SOH history DB 32 through the DB server 30 using the battery identification code.

If it is determined that the calculation request for the battery reuse grade is not received, in Step S90, the reuse grade management module 23 holds the process until the time period ΔT elapses, and if ΔT elapses, the reuse grade management module 23 returns the process to Step S80 again.

Step S110 proceeds after Step S100.

In Step S 110, the reuse grade management module 23 may determine a reuse grade corresponding to the current SOH by using the battery model code included in the battery identification code. That is, the reuse grade management module 23 may determine the reuse grade corresponding to the current SOH of the battery by inquiring the reuse grade information for each SOH corresponding to the battery model code from the look-up DB 34 through the DB server 30. Preferably, the reuse grade information for each SOH may be a look-up table capable of mapping the reuse grade by the SOH.

In one embodiment, a battery having an SOH of 80% or more may be determined as having a used car reuse grade, a battery having an SOH of 60% or more and less than 80% may be determined as having an ESS reuse grade, and a battery having an SOH of less than 60% may be determined as having a resource recovery grade.

Here, the used car reuse grade means a grade in which the battery may be used for replacement in a used electric vehicle. The battery endowed with the used car reuse grade may be reused for an electric vehicle with low output. For example, the battery endowed with the used car reuse grade may be used for a small electric vehicle, a golf electric vehicle, an electric two-wheeled vehicle, an electric bicycle, or the like. The ESS reuse grade means a grade in which the battery cannot be used in an electric vehicle that require a high output, but can be used in an ESS. The ESS may be an energy storage system that stores electric energy during late night hours in homes, buildings, factories, or the like. As another example, the ESS may be an energy storage system that stores renewable energy produced through solar power generation, wind power generation, geothermal power generation, or the like. As still another example, the ESS may be an energy storage system used for stabilizing a power grid. As still another example, the ESS may be an uninterruptible power supply (UPS) that supplies power when a power outage occurs. As still another example, the ESS may be power bank used when a power outage occurs. The resource recovery grade means a grade in which the battery cannot be reused because the SOH is remarkably low and thus the raw material used in the battery must be recovered by discarding the battery.

It is obvious to those skilled in the art that the SOH region defining the reuse grade may be changed according to the battery model. That is, the reuse grade information for each SOH may be independently generated for each battery model and stored in the look-up DB 34.

Step S120 proceeds after Step S110.

In Step S120, the reuse grade management module 23 may store the reuse grade of the battery in the reuse grade management DB 33 along with a time stamp to be matched with the battery identification code in conjunction with the DB server 30.

In addition, in Step S130, the reuse grade management module 23 may transmit information about the reuse grade of the battery to the client 50.

If the client 50 of the battery diagnosis device 51 receives the information about the reuse grade of the battery, the client 50 may display the reuse grade of the battery through a display. Then, a battery diagnosis operator (worker) may notify the reuse grade of the battery to the user of the electric vehicle 70. If the battery is judged to have a used car reuse grade, the user may continue to use the battery as it is, or replace the battery with a new one and sell the existing battery for a used car. In addition, if the battery is judged to have an ESS reuse grade, the user may replace the battery with a new one and sell the existing battery to be used as an ESS reuse battery. In addition, if the battery is judged to have a resource recovery grade, the user may replace the battery with a new one and return the existing battery to a battery manufacturer or a battery resource recovery company as a battery for resource recovery.

If the client 50 installed in the portable terminal 52 of the user receives the information about the reuse grade of the battery, the user may check the reuse grade of the battery mounted in the electric vehicle 70. If the battery is judged to have a used car reuse grade, the user may continue to use the battery as it is, or replace the battery with a new one at the electric vehicle service center and sell the existing battery for a used car through the electric vehicle service center. In addition, if the battery is judged to have an ESS reuse grade, the user may replace the battery with a new one at the electric vehicle service center and sell the existing battery as an ESS reuse battery through the electric vehicle service center. In addition, if the battery is judged to have a resource recovery grade, the user may replace the battery with a new one at the electric vehicle service center and return the existing battery to the battery manufacturer or the battery resource recovery company as a battery for resource recovery through the electric vehicle service center.

Meanwhile, the battery judged to have a used car reuse grade or an ESS reuse grade may be delivered from the electric vehicle service center to a battery reassembly company through an offline transportation means. In one example, the battery reassembly company may be a battery manufacturing company. In another example, the battery reassembly company may be a separate company from the battery manufacturing company.

The battery reassembly company may disassemble the battery to extract a plurality of cells and then reassemble them into a battery optimized for the reuse grade. Here, the cell may be a cylindrical cell, a pouch cell, or a rectangular cell. For example, the battery reassembly company may disassemble a battery mounted to an electric vehicle and reassemble it into a battery that can be used in an ESS.

During the battery reassembly process, an electrical connection may be newly made between unit cells, a sensor, a control unit, or the like may be attached, and the assembly of unit cells may be accommodated in an outer case.

A one-dimensional bar code, a two-dimensional bar code, or the like including a battery identification code may be printed on the outer case of the reassembled battery. It is also possible that the battery identification code is recorded in a memory inside the control unit included in the reassembled battery.

In one example, the bar code may further include the information about the battery reuse grade. In addition, the information about the battery reuse grade may be additionally recorded in the memory inside the control unit included in the reassembled battery.

Meanwhile, when two or more batteries extracted from electric vehicles are reassembled, the bar code printed on the outer case of the battery may further include a reassembly serial number. In addition, the reassembly serial number may be further stored in the memory of the control unit along with the battery identification code. In this way, the battery identification code may be printed on the surface of the outer case of the reassembled battery or recorded in the memory of the control unit, which may make it possible to trace the reuse history of the battery.

The reassembled battery may be delivered to a used battery transaction company, an ESS company, or a resource recovery company through distribution channels. The type of company to which the reassembled battery is delivered is determined based on the reuse grade of the battery. Before the battery delivered to the used battery transaction company, the ESS company or the resource recovery company for reuse or resource recovery comes into a reuse or resource recover cycle, the battery identification code of the battery that is a reuse target or the battery identification code of the battery that is a resource recovery target may be transmitted to the platform service system 10 through network 40, so that the process of tracking battery reuse may be further progressed.

The platform server 20 may further include a reuse tracking management module 24 to track the reuse process for the battery as described above.

The reuse tracking management module 24 may receive an approval message to approve the reuse of the battery from the client 50 through the network 40.

As an example, the reuse approval is to approve the reuse of the battery of the electric vehicle 70 as a used battery of another electric vehicle. As another example, the reuse approval is to approve the reuse of the battery of the electric vehicle 70 as a battery for an ESS. As still another example, the reuse approval is to approve the recycling of the battery of the electric vehicle 70 by returning it for resource recovery.

The approval procedure for battery reuse may be performed through an approval interface displayed on a screen of the client 50. The approval interface may be provided in the form of a GUI (Graphic User Interface) after the information about the reuse grade of the battery is displayed through the display of the battery diagnosis device 51 or the portable terminal 52 of the user.

The reuse tracking management module 24 may inquire through the approval interface whether the battery mounted to the electric vehicle is to be recycled for a used car, an ESS, or resource recovery, and provide a GUI through which the user may make approval.

The reuse tracking management module 24 may receive a reuse approval message from the client 50 through the network 40 if the user manipulates the GUI, for example a consent button.

The reuse tracking management module 24 may also transmit the battery reuse information containing the battery identification code and the reuse grade of a reuse-approved battery to the reuse company management system through the network 40. The reuse company management system may be an ESS management system 61 or a resource recovery management system 62. The ESS management system 61 or the resource recovery management system 62 is an integrated management system operated by an ESS company or a resource recovery company.

Also, if a battery warehousing certification message containing the battery identification code of the reuse battery is received from the reuse company management system, the reuse tracking management module 24 may store the battery identification code included in the battery warehousing certification message in the reuse tracking management DB 35 along with a time stamp to be matched with the identification code of the reuse company.

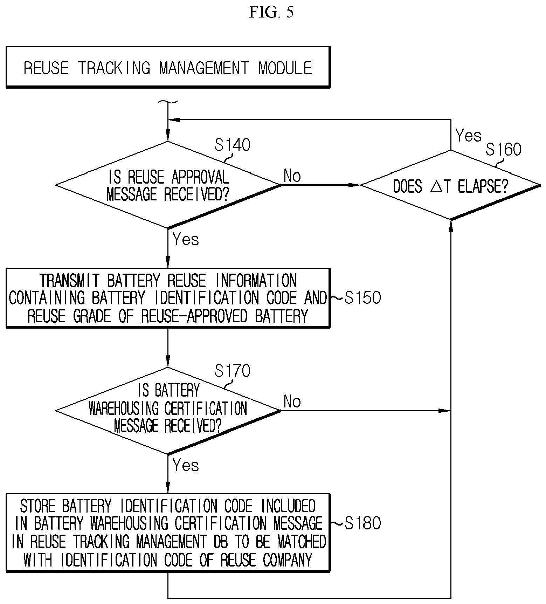

FIG. 5 is a flowchart for specifically illustrating a control logic performed by the reuse tracking management module 24 according to an embodiment of the present disclosure.

In Step S140, the reuse tracking management module 24 determines whether a reuse approval message is received from the client 50 through the network 40. Preferably, the reuse approval message may contain a battery identification code subject to reuse approval. The reuse approval message may be transmitted from the battery diagnosis device 51 or the portable terminal 52 of the user.

If it is checked that the reuse approval message is received, in Step S150, the reuse tracking management module 24 transmits the battery reuse information containing the battery identification code and the reuse grade of the reuse-approved battery to the reuse company management system.

For example, when the reuse grade of the reuse-approved battery is an ESS reuse grade, the reuse tracking management module 24 may transmit the battery reuse information to the ESS management system 61 through the network 40. As another example, when the reuse grade of the reuse-approved battery is a resource recovery grade, the reuse tracking management module 24 may transmit the battery reuse information to the resource recovery management system 62 through the network 40. The ESS management system 61 or the resource recovery management system 62 may record and manage the battery reuse information received through the network 40 in a database. The battery reuse information stored in the database is referred to when generating a battery warehousing certification message, which will be explained later.

Meanwhile, if it is not checked that the reuse approval message is received in Step S140, in Step S160, the reuse tracking management module 24 holds the process until the time period △T elapses, and returns the process to Step S140 when ΔT elapses.

Step S170 proceeds after Step S150.

In Step S170, the reuse tracking management module 24 determines whether a battery warehousing certification message is received from the reuse company management system through the network 40.

The battery warehousing certification message may be generated when the battery identification code and the information about the reuse grade are registered in the reuse company management system after the battery of the reuse grade is stored in a warehouse of a designated reuse company through an offline distribution channel, and then be transmitted to the reuse tracking management module 24 through network 40.

Preferably, the battery warehousing certification message may be generated through the following process and then transmitted to the reuse tracking management module 24 through the network 40.

A one-dimensional or two-dimensional bar code including the information about the battery identification code and the reuse grade may be attached to the reuse-approved battery. The reuse battery to which the bar code is attached is delivered to a reuse company designated by an operating company of the platform service system 10 through the offline distribution channel. After that, the bar code attached to the surface of the reused battery is scanned using a bar code scanner, so that the identification code and the reuse grade of the reuse battery are input to the reuse company management system. The reuse company management system may be an ESS management system 61 or a resource recovery management system 62. Then, if the battery identification code and the reuse grade of the reuse battery input through the bar code scanner are matched with the battery reuse information (the battery identification code and the reuse grade of the reuse battery) stored in advance in the database, the reuse company management system may generate a battery warehousing certification message containing the battery identification code of the reuse battery and the identification code of the reuse company and transmit the battery warehousing certification message to the reuse tracking management module 24 through the network 40.

In another example, if the information about the battery identification code and the reuse grade of the reuse battery is recorded in the memory of the control unit included in the reuse battery, the reuse company management system reads the information about the battery identification code and the reuse grade of the reuse battery stored in the memory of the control unit through a communication port of the control unit, and then if the read information is matched with the battery reuse information (the battery identification code and the reuse grade of the reuse battery) stored in advance in the database, the reuse company management system may generate a battery warehousing certification message containing the battery identification code of the reuse battery and the identification code of the reuse company and transmit the battery warehousing certification message to the reuse tracking management module 24 through the network 40.

Step S180 proceeds after Step S170.

The reuse tracking management module 24 matches the battery identification code of the reuse battery and the identification code of the reuse company included in the battery warehousing certification message, and stores the same in the reuse tracking management DB 35 along with a time stamp in conjunction with the DB server 30. The time stamp may be regarded as information indicating the time point when the use of the reuse battery is started. In this way, it is possible to integrally manage whether the reuse battery enters an actual reuse cycle along with the reuse status of the battery.

According to another aspect of the present disclosure, the platform service system 10 may provide a reuse grade change notification service that detects a change in the reuse grade of the battery and notifies the client 50 of the portable terminal 52 of the user that the reuse grade is changed.

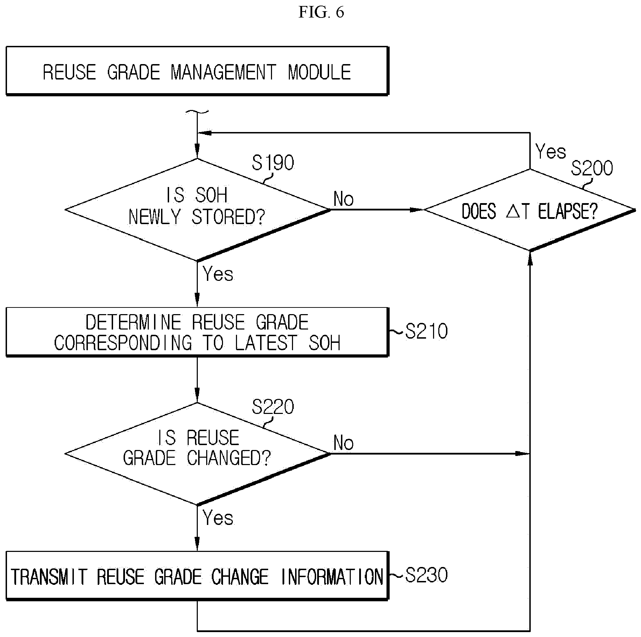

FIG. 6 is a flowchart for specifically illustrating a process of providing a reuse grade change notification service by the reuse grade management module 23 according to an embodiment of the present disclosure.

Referring to FIG. 6, in Step S190, the reuse grade management module 23 judges whether there is a battery in which the SOH is newly stored by inquiring the SOH history DB 32 through the DB server 30.

If the battery with the newly stored SOH is checked, the reuse grade management module 23 inquires a latest SOH and a battery identification code of the corresponding battery from the SOH history DB 32 in conjunction with the DB server 30, and determines the reuse grade of the battery corresponding to the latest SOH with reference to predefined reuse grade information for each SOH by using the battery model code included in the battery identification code.

If the battery in which the SOH is newly stored is not checked in Step S190, in Step S200, the reuse grade management module 23 holds the process for a time period △T and then returns the process to Step S190.

Step S210 proceeds after Step S190.

In Step S210, the reuse grade management module 23 inquires a reuse grade stored immediately before from the reuse grade management DB 33 through the DB server 30 by using the battery identification code of the battery whose reuse grade is newly determined, and determines whether the reuse grade is changed.

If it is determined that the reuse grade is changed, in Step S230, the reuse grade management module 23 generates a message notifying that the reuse grade is changed and transmits the message to the client 50 of the portable terminal 52 of the user through the network 40.

Then, the user recognizes that the reuse grade of the battery installed in the electric vehicle 70 is changed, visits an electric vehicle service center to change the battery, and then changes the battery extracted from the electric vehicle to a used car battery, an ESS battery, or a resource recovery battery.

The reuse grade change notification service may be provided through an integrated information display device of an electric vehicle. In this case, a computing device of the electric vehicle may receive a message informing that the reuse grade of the battery mounted in the electric vehicle is changed from the reuse grade management module 23 through the wireless communication network, and may display the message through the screen of the integrated information display device.

According to still another aspect of the present disclosure, the platform service system 10 may provide a service for continuously managing the reuse grade for a battery even when the battery of the electric vehicle is reused as a battery for the ESS.

Specifically, the data management module 21 may periodically the receive battery characteristic data containing the voltage profile and/or the current profile according to the SOC of the reuse battery and the battery identification code of the reuse battery from the ESS management system 61 through the network 40.

In addition, the data management module 21 may match the battery characteristic data with the battery identification code of the reuse battery and store the same in the battery characteristic data DB 31 along with a time stamp in conjunction with the DB server 30.

In addition, the SOH management module 22 may analyze the characteristic data of the reuse battery stored in the battery characteristic data DB 31 to calculate a current SOH of the reuse battery, and stores the current SOH in the SOH history DB 32 to be matched with the battery identification code of the reuse battery along with the time stamp in conjunction with the DB server 30.

The reuse grade management module 23 may receive a reuse grade calculation request from the ESS management system 61 through the network 40 along with the battery identification code of the reuse battery. In addition, the reuse grade management module 23 may determine the current SOH of the reuse battery by inquiring the SOH history DB 32 using the battery identification code of the reuse battery, determine a reuse grade corresponding to the current SOH with reference to the battery model code included in the battery identification code and predefined reuse grade information for each SOH and store the same in the reuse grade management DB 33, and transmit the information about the reuse grade to the ESS management system 61. Then, the ESS management system 61 may store and manage the information about the reuse grade of the battery to be matched with the battery identification code in the database.

According to another aspect of the present disclosure, the platform service system 10 may provide a service for automatically providing a notification when the reuse grade of the reuse battery is changed even when the battery of the electric vehicle is reused as a battery for the ESS.

That is, the SOH management module 22 may calculate the SOH of the battery based on the new characteristic data of a reuse battery stored in the battery characteristic data DB 31 and accumulatively store the same in the SOH history DB 32.

In addition, the reuse grade management module 23 may determine the reuse grade of the reuse battery corresponding to the latest SOH, and if the reuse grade is changed compared to a previous reuse grade, namely if the reuse grade is changed to a resource recovery grade, the reuse grade management module 23 may transmit the reuse grade change information to the ESS management system 61 through the network 40. Preferably, the reuse grade change information may include the battery identification code of a battery whose reuse grade is changed.

If the reuse grade change information is received through the network 40, the ESS management system 61 may store the battery identification code of the reuse battery whose reuse grade is changed in the database and output the same through the display.

The ESS company may deliver batteries whose reuse grade is changed to a resource recovery grade to the resource recovery company, and the resource recovery company may recover raw materials (e.g., Li, Co, Mn, Ni, etc.) included in the battery through the recycling process for the battery.

According to still another aspect of the present disclosure, the platform service system 10 may further include a residual value management module 25.

The residual value management module 25 may receive a battery residual value evaluation request along with the battery identification code from a battery transaction system 63 or an insurance company system 64 through the network 40, determine a current SOH of the battery by inquiring the SOH history DB 32 using the battery identification code, determine a residual value of the battery corresponding to the current SOH with reference to the battery model code included in the battery identification code and predefined residual value information for each SOH, and transmit the residual value to the battery transaction system 63 or the insurance company system 64 through the network 40.

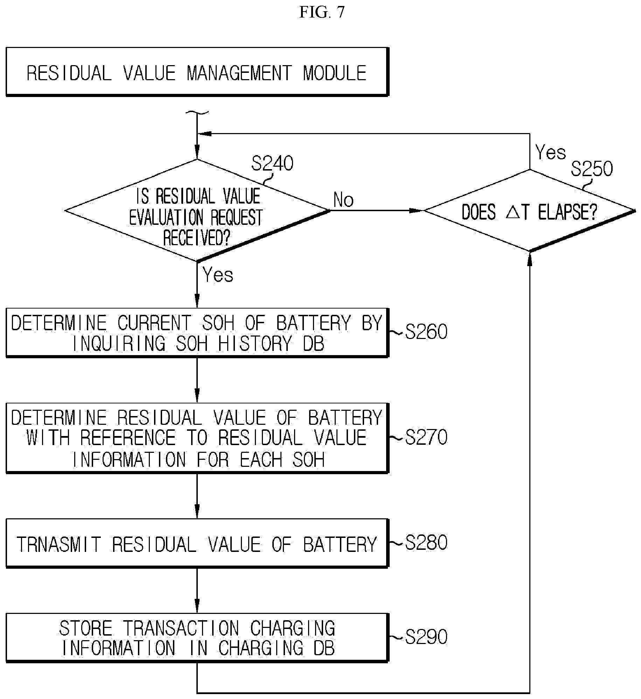

FIG. 7 is a flowchart for specifically illustrating a process of evaluating and providing a residual value of a battery by the residual value management module 25 according to an embodiment of the present disclosure.

Referring to FIG. 7, in Step S240, the residual value management module 25 determines whether a battery residual value evaluation request is received along with the battery identification code through the network 40 from the battery transaction system 63 or the insurance company system 64.

If it is determined that the battery residual value evaluation request is received, in Step S260, the residual value management module 25 determines a current SOH of the battery from the SOH history DB 32 through the DB server 30 using the battery identification code.

Meanwhile, if it is not checked that the battery residual value evaluation request is received, the residual value management module 25 holds the process for a time period ΔT, and returns the process to Step S240 when ΔT elapses.

Step S270 proceeds after Step S260.

In Step S270, the residual value management module 25 determines a residual value of the battery corresponding to the SOH of the battery by inquiring the predefined residual value information for each SOH through the DB server 30 using the battery model code included in the battery identification code. The residual value may be expressed as a ratio of a current value to the initial value of the battery. The residual value information for each SOH may be stored in advance in the look-up DB 34 in the format of a look-up table. Preferably, the residual value information for each SOH may be generated to be distinguished by the battery model code and stored in advance in the look-up DB 34.

Also, in Step S280, the residual value management module 25 transmits the residual value information of the battery to the battery transaction system 63 or the insurance company system 64 that has requested the residual value information of the battery through the network 40.

In addition, in Step S290, the residual value management module 25 may store transaction charging information containing an identification code of the battery transaction system 63 or the insurance company system 64 to which the battery residual value is transmitted, a time stamp representing transmission time, and a charging fee in the charging DB 36.

The battery transaction system 63 may provide an E-commerce website through the network 40. The E-commerce website provides a distribution channel for used battery distribution companies or electric vehicle owners to sell used batteries online.

Preferably, after receiving a used battery from the used battery distribution company, a company operating the battery transaction system 63 may evaluate the residual value of the battery through the platform service system 10, then decides the price of the battery according to the residual value, and sell the battery.

In the process of registering a used battery on the E-commerce website for sale, the battery transaction system 63 may query the residual value of the battery to the platform service system 10 according to the present disclosure and receive the residual value. The battery residual value transmitted from the platform service system 10 may be utilized by the battery transaction system 63 to calculate the price of the used battery. In one example, the battery transaction system 63 may determine a used battery price in proportion to the battery residual value and may provide used battery sales information through the E-commerce website.

The insurance company system 64 may provide an insurance subscription website through the network 40. The insurance subscription website may provide a service for users of used electric vehicles to purchase vehicle insurance online.

The insurance company system 64 may receive the battery identification code from the user in the process of receiving insurance subscription for the used electric vehicle, query the residual value of the battery to the platform service system 10 according to the present disclosure, and receive the residual value. The insurance company system 64 may determine the residual value of the used electric vehicle using the battery residual value provided by the platform service system 10 and a driving distance of the used electric vehicle input from the user, and calculate an insurance premium of the used electric vehicle based thereon. Here, it is obvious that as the battery residual value is higher, the residual value of the used electric vehicle is determined higher.

According to still another aspect of the present disclosure, the platform service system 10 may provide a warranty service for a battery whose battery reuse grade has been continuously managed from the stage of delivery of the electric vehicle.

That is, any server or any system may transmit a battery warranty request to the platform service system 10 along with the battery identification code through the network 40.

Then, the platform service system 10 inquires the SOH history DB 32 through the DB server 30 using the battery identification code, and if it is checked that the reuse grade is continuously managed from 100% SOH for the corresponding battery, the platform service system 10 may transmit a warranty message to the server or system that has inquired the battery warranty request, generate charging information containing an identification code of the server or system for the corresponding transaction, and record the charging information in the charging DB 36.

According to the present disclosure, by providing an integrated management model for the reuse of a battery mounted in an electric vehicle, the residual value may be used to the maximum from when the battery is shipped until when the battery is discarded. In addition, since the platform service system estimates the SOH even for a battery that has entered the reuse stage and continuously manages the reuse grade thereof, it is possible to integrally manage the battery throughout the entire use cycle of the battery. In addition, since the SOH is managed throughout the entire use cycle of the battery through the platform service system, the reliability and accuracy of the battery residual value may be improved. In addition, the used electric vehicle transaction market may be activated since the battery residual value calculated based on accurate SOH information is utilized to calculate the transaction price of a used electric vehicle (battery) or to calculate the insurance premium of the used electric vehicle. In addition, the present disclosure may implement a new business concept of battery warranty service.

In the present disclosure, one or more of the various control logics performed by each module included in the platform server 20 may be combined, and the combined control logics may be written in a computer-readable code system and recorded in a computer-readable recording medium. The recording medium is not particularly limited as long as it is accessible by a processor included in a computer. As an example, the storage medium includes at least one selected from the group consisting of a ROM, a RAM, a register, a CD-ROM, a magnetic tape, a hard disk, a floppy disk and an optical data recording device. The code scheme may be distributed to a networked computer to be stored and executed therein. In addition, functional programs, codes and code segments for implementing the combined control logics may be easily inferred by programmers in the art to which the present disclosure belongs.

In the description of the various exemplary embodiments of the present disclosure, it should be understood that elements referred to as 'module' are distinguished functionally rather than physically. Therefore, each element may be selectively integrated with other elements or each element may be divided into sub-elements for effective implementation control logic(s).

The present disclosure has been described in detail.

## Claims

1. A platform service system (10) for integrated battery management, comprising:
(a) a data management module (21) configured to collect battery characteristic data of an electric vehicle (70) through a network (40) and accumulatively store the battery characteristic data in a battery characteristic data database, DB, (31) to be matched with a battery identification code;
(b) a State of Health, SOH, management module (22) configured to calculate a SOH, which is a current SOH of a battery, by analyzing the battery characteristic data and store the SOH in a SOH history DB (32) to be matched with the battery identification code;
(c) a reuse grade management module (23) configured to inquire the SOH history DB (32) using the battery identification code to determine a current SOH when a reuse grade calculation request is received from a client (50) through the network (40) along with the battery identification code, determine a reuse grade corresponding to the current SOH with reference to predefined reuse grade information for each SOH and store the reuse grade in a reuse grade management DB (33), and transmit the information about the reuse grade to the client (50); and
(d) a reuse tracking management module (24) configured to receive a reuse approval message for the battery from the client (50) through the network (40), transmit battery reuse information containing the battery identification code of a reuse-approved battery to a reuse company management system through the network (40), and store a battery identification code contained in a battery warehousing certification message in a reuse tracking management DB to be matched with an identification code of a reuse company when the battery warehousing certification message containing the battery identification code of a reuse battery is received from the reuse company management system.

2. The platform service system (10) for integrated battery management according to claim 1,
wherein the predefined reuse grade information for each SOH defines a reuse grade for each SOH region.

3. The platform service system (10) for integrated battery management according to claim 2,
wherein the reuse grade includes a used car reuse grade, an Energy Storage System, ESS, reuse grade and a resource recovery grade.

4. The platform service system (10) for integrated battery management according to claim 1,
wherein the reuse company management system is an ESS management system (61) or a resource recovery management system (62).

5. The platform service system (10) for integrated battery management according to claim 1,
wherein the SOH management module (22) is configured to calculate a SOH of the battery from new battery characteristic data stored in the battery characteristic data DB (31) and accumulatively store the SOH in the SOH history DB (32), and
the reuse grade management module (23) is configured to determine a reuse grade corresponding to a latest SOH, compare the reuse grade with a previous reuse grade, and transmit reuse grade change information to the client (50) through the network (40) when the reuse grade is changed.

6. The platform service system (10) for integrated battery management according to claim 1,
wherein the client (50) is a program installed in a battery diagnosis device (51) or a portable terminal of a user (52).

7. The platform service system (10) for integrated battery management according to claim 1,
wherein the data management module (21) is configured to periodically collect battery characteristic data containing a voltage profile and/or a current profile according to the SOC of a reuse battery from an ESS management system (61) through the network (40) and store the battery characteristic data in the battery characteristic data DB (31) to be matched with the battery identification code of the reuse battery,
the SOH management module (22) is configured to calculate a current SOH of the reuse battery by analyzing the battery characteristic data of the reuse battery and store the current SOH in the SOH history DB (32) to be matched with the battery identification code of the reuse battery, and
the reuse grade management module (23) is configured to receive a reuse grade calculation request from the ESS management system (61) through the network (40) along with the battery identification code of the reuse battery, determine a current SOH by inquiring the SOH history DB (32) using the battery identification code of the reuse battery, determine a reuse grade corresponding to the current SOH with reference to the predefined reuse grade information for each SOH and store the reuse grade in the reuse grade management DB (33), and transmit the information about the reuse grade to the ESS management system (61).

8. The platform service system for integrated battery management according to claim 7,
wherein the SOH management module (22) is configured to calculate a SOH of the battery from new battery characteristic data stored in the battery characteristic data DB and accumulatively store the SOH in the SOH history DB (32), and
the reuse grade management module (23) is configured to determine a reuse grade corresponding to a latest SOH, compare the reuse grade with a previous reuse grade, and transmit reuse grade change information to the ESS management system (61) through the network (40) when the reuse grade is changed.

9. The platform service system for integrated battery management according to claim 1, further comprising:
a residual value management module (25) configured to receive a battery residual value evaluation request from a battery transaction system (63) or an insurance company system (64) through the network (40) along with the battery identification code, determine a current SOH of the battery by inquiring the SOH history DB (32) using the battery identification code, determine a battery residual value with reference to predefined residual value information for each SOH, and transmit the battery residual value to the battery transaction system (63) or the insurance company system (64).

10. The platform service system (10) for integrated battery management according to claim 9,
wherein the residual value management module (25) is configured to store transaction charging information containing an identification code of the battery transaction system (63) or the insurance company system (64) to which the battery residual value is transmitted, a time stamp representing transmission time, and a charging fee in a charging DB (36).

11. A platform service method for integrated battery management, comprising:
(a) collecting battery characteristic data of an electric vehicle through a network (40) and accumulatively storing (S20) the battery characteristic data in a battery characteristic data database, DB, (31) to be matched with a battery identification code;
(b) calculating (S70) a State of Health, SOH, which is a current SOH of a battery, by analyzing the battery characteristic data and storing the SOH in a SOH history DB (32) to be matched with the battery identification code;
(c) receiving a reuse grade calculation request from a client (50) through the network (40) along with the battery identification code;
(d) inquiring the SOH history DB (32) using the battery identification code to determine a current SOH, determining (S210) a reuse grade corresponding to the current SOH with reference to predefined reuse grade information for each SOH, and storing (S120) the reuse grade in a reuse grade management DB (33);
(e) transmitting (S130) the information about the reuse grade to the client (50);
(f) receiving a reuse approval message for the battery from the client (50) through the network;
(g) transmitting (S 150) battery reuse information containing the battery identification code of a reuse-approved battery to a reuse company management system through the network (50); and
(h) storing (S180) a battery identification code contained in a battery warehousing certification message in a reuse tracking management DB (35) to be matched with an identification code of a reuse company when the battery warehousing certification message containing the battery identification code of a reuse battery is received from the reuse company management system.

12. The platform service method for integrated battery management according to claim 11,
wherein the predefined reuse grade information for each SOH defines a reuse grade for each SOH region, and
the reuse grade includes a used car reuse grade, an ESS reuse grade and a resource recovery grade.

13. The platform service method for integrated battery management according to claim 11, further comprising:
calculating a latest SOH of the battery from new battery characteristic data stored in the battery characteristic data DB (31) and accumulatively store the latest SOH in the SOH history DB (32); and
determining (S210) a reuse grade corresponding to the latest SOH, comparing (S220) the reuse grade with a previous reuse grade, and transmitting (S230) reuse grade change information to the client (50) through the network (40) when the reuse grade is changed.

14. The platform service method for integrated battery management according to claim 11, further comprising:
periodically collecting battery characteristic data containing a voltage profile and/or a current profile according to the SOC of a reuse battery from an ESS management system through the network (40) and storing (S20) the battery characteristic data in the battery characteristic data DB (31) to be matched with the battery identification code of the reuse battery;
calculating (S70) a current SOH of the reuse battery by analyzing the battery characteristic data of the reuse battery and storing the current SOH in the SOH history DB (32) to be matched with the battery identification code of the reuse battery; and
receiving a reuse grade calculation request from the ESS management system through the network (40) along with the battery identification code of the reuse battery, determining (S100) a current SOH by inquiring the SOH history DB (32) using the battery identification code of the reuse battery, determining (S 110) a reuse grade corresponding to the current SOH with reference to the predefined reuse grade information for each SOH and storing (S120) the reuse grade in the reuse grade management DB (33), and transmitting (S130) the information about the reuse grade to the ESS management system.

15. The platform service method for integrated battery management according to claim 11, further comprising:
receiving a battery residual value evaluation request from a battery transaction system (63) or an insurance company system (64) through the network (40) along with the battery identification code;
determining (S260) a current SOH of the battery by inquiring the SOH history DB (32) using the battery identification code; and
determining (S270) a battery residual value with reference to predefined residual value information for each SOH, and transmitting (S280) the battery residual value to the battery transaction system (63) or the insurance company system (64).

16. The platform service method for integrated battery management according to claim 15, further comprising:
storing (S290) transaction charging information containing an identification code of the battery transaction system (63) or the insurance company system (64) to which the battery residual value is transmitted, a time stamp representing transmission time, and a charging fee in a charging DB (36).

## Patentansprüche

1. Plattformservicesystem (10) für integriertes Batteriemanagement, aufweisend:
(a) ein Datenmanagementmodul (21), das dazu eingerichtet ist, Batteriekenndaten eines Elektrofahrzeugs (70) über ein Netzwerk (40) zu sammeln und die Batteriekenndaten in einer Batteriekenndaten-Datenbank, DB, (31) mit einem zugehörigen Batterieidentifikationscode kumulativ zu speichern;
(b) ein State-of-Health, SOH, -Managementmodul (22), das dazu eingerichtet ist, einen SOH, der ein aktueller SOH einer Batterie ist, durch Analysieren der Batteriekenndaten zu berechnen und den SOH in einer SOH-Verlaufs-DB (32) mit dem zugehörigen Batterieidentifikationscode zu speichern;
(c) ein Wiederverwendungsgrad-Managementmodul (23), das dazu eingerichtet ist, die SOH-Verlaufs-DB (32) unter Verwendung des Batterieidentifikationscodes abzufragen, um einen aktuellen SOH zu bestimmen, wenn über das Netzwerk (40) eine Wiederverwendungstrad-Berechnungsanfrage von einem Client (50) zusammen mit dem Batterieidentifikationscode empfangen wird, einen Wiederverwendungs-Grad, der dem aktuellen SOH entspricht, unter Bezugnahme auf vordefinierte Wiederverwendungsgrad-Informationen für jeden SOH zu bestimmen und den Wiederverwendungsgrad in einer Wiederverwendungsgrad-Management-DB (33) zu speichern und die Informationen über den Wiederverwendungsgrad an den Client (50) zu übertragen; und
(d) ein Wiederverwendungstracking-Managementmodul (24), das dazu eingerichtet ist, eine Wiederverwendungs-Bestätigungsnachricht für die Batterie von dem Client (50) über das Netzwerk (40) zu empfangen, Batteriewiederverwendungs-Informationen, die den Batterieidentifikationscode einer wiederverwendungsbestätigten Batterie enthalten, über das Netzwerk (40) an ein Wiederverwendungsunternehmen-Managementsystem zu übertragen und einen Batterieidentifikationscode, der in einer Batterielagerungs-Zertifizierungsnachricht enthalten ist, in einer Wiederverwendungstracking-Management-DB mit einem zugehörigen Identifikationscode eines Wiederverwendungsunternehmens zu speichern, wenn die Batterielagerungs-Zertifizierungsnachricht, die den Batterieidentifikationscode einer Wiederverwendungsbatterie enthält, von dem Wiederverwendungs-Unternehmensmanagementsystem empfangen wird.

2. Plattformservicesystem (10) für integriertes Batteriemanagement nach Anspruch 1,
wobei die vordefinierten Wiederverwendungsgrad-Informationen für jeden SOH einen Wiederverwendungsgrad für jede SOH-Region definieren.

3. Plattformservicesystem (10) für integriertes Batteriemanagement nach Anspruch 2,
wobei der Wiederverwendungsgrad einen Wiederverwendungsgrad für gebrauchtes Auto, einen Wiederverwendungsgrad für Energiespeichersystem, ESS, und einen Ressourcen-Wiederherstellungsgrad umfasst.

4. Plattformservicesystem (10) für integriertes Batteriemanagement nach Anspruch 1,
wobei das Wiederverwendungsunternehmen-Managementsystem ein ESS-Managementsystem (61) oder ein Ressourcen-Wiederherstellungsmanagementsystem (62) ist.

5. Plattformservicesystem (10) für integriertes Batteriemanagement nach Anspruch 1,
wobei das SOH-Managementmodul (22) dazu eingerichtet ist, einen SOH der Batterie aus neuen Batteriekenndaten, die in der Batteriekenndaten-DB (31) gespeichert sind, zu berechnen und den SOH kumulativ in der SOH-Verlaufs-DB (32) zu speichern, und
das Wiederverwendungsgrad-Managementmodul (23) dazu eingerichtet ist, einen Wiederverwendungsgrad, der einem letzten SOH entspricht, zu bestimmen, den Wiederverwendungsgrad mit einem vorherigen Wiederverwendungsgrad zu vergleichen und Wiederverwendungsgrad-Änderungsinformationen über das Netzwerk (40) an den Client (50) zu übertragen, wenn der Wiederverwendungsgrad geändert wird.

6. Plattformservicesystem (10) für integriertes Batteriemanagement nach Anspruch 1,
wobei der Client (50) ein Programm ist, das in einer Batteriediagnosevorrichtung (51) oder einem tragbaren Endgerät eines Benutzers (52) installiert ist.

7. Plattformservicesystem (10) für integriertes Batteriemanagement nach Anspruch 1,
wobei das Datenmanagementmodul (21) dazu eingerichtet ist, Batteriekenndaten, die ein Spannungsprofil und/oder ein Stromprofil gemäß dem SOC einer Wiederverwendungsbatterie enthalten, von einem ESS-Managementsystem (61) über das Netzwerk (40) periodisch zu sammeln und die Batteriekenndaten in der Batteriekenndaten-DB (31) mit dem zugehörigen Batterieidentifikationscode der Wiederverwendungsbatterie zu speichern,
das SOH-Managementmodul (22) dazu eingerichtet ist, einen aktuellen SOH der Wiederverwendungsbatterie durch Analysieren der Batteriekenndaten der Wiederverwendungsbatterie zu berechnen und den aktuellen SOH in der SOH-Verlaufs-DB (32) mit dem zugehörigen Batterieidentifikationscode der Wiederverwendungsbatterie zu speichern, und
das Wiederverwendungsgrad-Managementmodul (23) dazu eingerichtet ist, eine Wiederverwendungsgrad-Berechnungsanfrage von dem ESS-Managementsystem (61) über das Netzwerk (40) zusammen mit dem Batterieidentifikationscode der Wiederverwendungsbatterie zu empfangen, einen aktuellen SOH durch Abfragen der SOH-Verlaufs-DB (32) unter Verwendung des Batterieidentifikationscodes der Wiederverwendungsbatterie zu bestimmen, einen Wiederverwendungsgrad, der dem aktuellen SOH entspricht, unter Bezugnahme auf die vordefinierten Wiederverwendungsgrad-Informationen für jeden SOH zu bestimmen und den Wiederverwendungsgrad in der Wiederverwendungsgrad-Management-DB (33) zu speichern und die Informationen über den Wiederverwendungsgrad an das ESS-Managementsystem (61) zu übertragen.

8. Plattformservicesystem für integriertes Batteriemanagement nach Anspruch 7,
wobei das SOH-Managementmodul (22) dazu eingerichtet ist, einen SOH der Batterie aus neuen Batteriekenndaten, die in der Batteriekenndaten-DB gespeichert sind, zu berechnen und den SOH kumulativ in der SOH-Verlaufs-DB (32) zu speichern, und
das Wiederverwendungsgrad-Managementmodul (23) dazu eingerichtet ist, einen Wiederverwendungsgrad, der einem letzten SOH entspricht, zu bestimmen, den Wiederverwendungsgrad mit einem vorherigen Wiederverwendungsgrad zu vergleichen und Wiederverwendungsgrad-Änderungsinformationen über das Netzwerk (40) an das ESS-Managementsystem (61) zu übertragen, wenn sich der Wiederverwendungsgrad verändert hat.

9. Plattformservicesystem für integriertes Batteriemanagement nach Anspruch 1, ferner aufweisend:
ein Restwert-Managementmodul (25), das dazu eingerichtet ist, eine Batterierestwert-Bewertungsanfrage von einem Batterietransaktionssystem (63) oder einem Versicherungsunternehmenssystem (64) über das Netzwerk (40) zusammen mit dem Batterieidentifikationscode zu empfangen, einen aktuellen SOH der Batterie durch Abfragen der SOH-Verlaufs-DB (32) unter Verwendung des Batterieidentifikationscodes zu bestimmen, einen Batterierestwert unter Bezugnahme auf vordefinierte Restwert-Informationen für jeden SOH zu bestimmen und den Batterierestwert an das Batterietransaktionssystem (63) oder das Versicherungs-Untemehmenssystem (64) zu übertragen.

10. Plattformservicesystem (10) für integriertes Batteriemanagement nach Anspruch 9,
wobei das Restwert-Managementmodul (25) dazu eingerichtet ist, Transaktionsladeinformationen, die einen Identifikationscode des Batterietransaktionssystems (63) oder des Versicherungsunternehmenssystems (64) enthalten, an den der Batterierestwert übertragen wird, einen Zeitstempel, der die Übertragungszeit repräsentiert, und eine Ladegebühr in einer Lade-DB (36) zu speichern.

11. Plattformserviceverfahren für integriertes Batteriemanagement, aufweisend:
(a) Sammeln von Batteriekenndaten eines Elektrofahrzeugs über ein Netzwerk (40) und kumulatives Speichern (S20) der Batteriekenndaten in einer Batteriekenndaten-Datenbank, DB, (31) mit einem zugehörigen Batterieidentifikationscode;
(b) Berechnen (S70) eines State-of-Health, SOH, der ein aktueller SOH einer Batterie ist, durch Analysieren der Batteriekenndaten und Speichern des SOH in einer SOH-Verlaufs-DB (32) mit dem zugehörigen Batterieidentifikationscode;
(c) Empfangen einer Wiederverwendungsgrad-Berechnungsanfrage von einem Client (50) über das Netzwerk (40) zusammen mit dem Batterieidentifikationscode;
(d) Abfragen der SOH-Verlaufs-DB (32) unter Verwendung des Batterieidentifikationscodes, um einen aktuellen SOH zu bestimmen, Bestimmen (S210) eines Wiederverwendungsgrads, der dem aktuellen SOH entspricht, unter Bezugnahme auf vordefinierte Wiederverwendungsgrad-Informationen für jeden SOH und Speichern (S120) des Wiederverwendungsgrads in einer Wiederverwendungsgrad-Management-DB (33);
(e) Übertragen (S130) der Informationen über den Wiederverwendungsgrad an den Client (50);
(f) Empfangen einer Wiederverwendungs-Bestätigungsnachricht für die Batterie von dem Client (50) über das Netzwerk;
(g) Übertragen (S150) von Batteriewiederverwendungs-Informationen, die den Batterieidentifikationscode einer wiederverwendungsbestätigten Batterie enthalten, über das Netzwerk (50) an ein Wiederverwendungsunternehmen-Managementsystem; und
(h) Speichern (S180) eines Batterieidentifikationscodes, der in einer Batterielagerungs-Zertifizierungsnachricht enthalten ist, in einer Wiederverwendungstracking-Management-DB (35) mit einem zugehörigen Identifikationscode eines Wiederverwendungsunternehmens, wenn die Batterielagerungs-Zertifizierungsnachricht, die den Batterieidentifikationscode einer Wiederverwendungsbatterie enthält, von dem Wiederverwendungsunternehmen-Managementsystem empfangen wird.

12. Plattformserviceverfahren für integriertes Batteriemanagement nach Anspruch 11,
wobei die vordefinierten Wiederverwendungsgrad-Informationen für jeden SOH einen Wiederverwendungsgrad für jede SOH-Region definieren, und
der Wiederverwendungsgrad einen Wiederverwendungsgrad für gebrauchtes Auto, einen ESS-Wiederverwendungsgrad und einen Ressourcen-Wiederherstellungsgrad umfasst.

13. Plattformserviceverfahren für integriertes Batteriemanagement nach Anspruch 11, ferner aufweisend:
Berechnen eines letzten SOH der Batterie aus neuen Batteriekenndaten, die in der Batteriekenndaten-DB (31) gespeichert sind, und kumulatives Speichern des letzten SOH in der SOH-Verlaufs-DB (32); und
Bestimmen (S210) eines Wiederverwendungsgrads, der dem letzten SOH entspricht, Vergleichen (S220) des Wiederverwendungsgrads mit einem vorherigen Wiederverwendungsgrad und Übertragen (S230) von Wiederverwendungsgrad-Änderungsinformationen über das Netzwerk (40) an den Client (50), wenn sich der Wiederverwendungsgrad verändert hat.

14. Plattformserviceverfahren für integriertes Batteriemanagement nach Anspruch 11, ferner aufweisend:
periodisches Sammeln von Batteriekenndaten, die ein Spannungsprofil und/oder ein Stromprofil gemäß dem SOC einer Wiederverwendungsbatterie enthalten, von einem ESS-Managementsystem über das Netzwerk (40) und Speichern (S20) der Batteriekenndaten in der Batteriekenndaten-DB (31) mit dem zugehörigen Batterieidentifikationscode der Wiederverwendungsbatterie;
Berechnen (S70) eines aktuellen SOH der Wiederverwendungsbatterie durch Analysieren der Batteriekenndaten der Wiederverwendungsbatterie und Speichern des aktuellen SOH in der SOH-Verlaufs-DB (32) mit dem zugehörigen Batterieidentifikationscode der Wiederverwendungsbatterie; und
Empfangen einer Wiederverwendungsgrad-Berechnungsanfrage von dem ESS-Managementsystem über das Netzwerk (40) zusammen mit dem Batterieidentifikationscode der Wiederverwendungsbatterie, Bestimmen (S100) eines aktuellen SOH durch Abfragen der SOH-Verlaufs-DB (32) unter Verwendung des Batterieidentifikationscodes der Wiederverwendungsbatterie, Bestimmen (S110) eines Wiederverwendungsgrads, der dem aktuellen SOH entspricht, unter Bezugnahme auf die vordefinierten Wiederverwendungsgrad-Informationen für jeden SOH und Speichern (S120) des Wiederverwendungsgrads in der Wiederverwendungsgrad-Management-DB (33) und Übertragen (S130) der Informationen über den Wiederverwendungsgrad an das ESS-Managementsystem.

15. Plattformserviceverfahren für integriertes Batteriemanagement nach Anspruch 11, ferner aufweisend:
Empfangen einer Batterierestwert-Bewertungsanfrage von einem Batterietransaktionssystem (63) oder einem Versicherungsunternehmenssystem (64) über das Netzwerk zusammen mit dem Batterieidentifikationscode;
Bestimmen (S260) eines aktuellen SOH der Batterie durch Abfragen der SOH-Verlaufs-DB (32) unter Verwendung des Batterieidentifikationscodes; und
Bestimmen (S270) eines Batterierestwerts unter Bezugnahme auf vordefinierte Restwertinformationen für jeden SOH und Übertragen (S280) des Batterierestwerts an das Batterietransaktionssystem (63) oder das Versicherungsunternehmenssystem (64).

16. Plattformserviceverfahren für integriertes Batteriemanagement nach Anspruch 15, ferner aufweisend:
Speichern (S290) von Transaktionsverrechnungsinformationen, die einen Identifikationscode des Batterietransaktionssystems (63) oder des Versicherungsunternehmenssystems (64) enthalten, an den der Batterierestwert übertragen wird, einen Zeitstempel, der die Übertragungszeit repräsentiert, und einer Verrechnungsgebühr in einer Verrechnungs-DB (36).

## Revendications

1. Système de service de plateforme (10) pour une gestion intégrée de batterie, comprenant :
(a) un module de gestion de données (21) configuré pour collecter des données caractéristiques de batterie d'un véhicule électrique (70) via un réseau (40) et mémoriser de manière cumulative les données caractéristiques de batterie dans une base de données caractéristiques de batterie (31), à mettre en correspondance avec un code d'identification de batterie ;
(b) un module de gestion d'état de santé, SOH (22), configuré pour calculer un SOH, lequel est un SOH actuel d'une batterie, en analysant les données caractéristiques de batterie et en mémorisant le SOH dans une base de données d'historique de SOH (32), à mettre en correspondance avec le code d'identification de batterie ;
(c) un module de gestion de score de recyclage (23) configuré pour interroger la base de données d'historique de SOH (32) au moyen du code d'identification de batterie afin de déterminer un SOH actuel lorsqu'une demande de calcul de score de recyclage est reçue d'un client (50) via le réseau (40) avec le code d'identification de batterie, déterminer un score de recyclage correspondant au SOH actuel en référence aux informations prédéfinies sur le score de recyclage pour chaque SOH et mémoriser le score dans une base de données de gestion des scores de recyclage (33), et transmettre les informations sur le score de recyclage au client (50) ; et
(d) un module de gestion de suivi de recyclage (24) configuré pour recevoir un message d'approbation de recyclage de la batterie par le client (50) via le réseau (40), transmettre des informations de recyclage de batterie contenant le code d'identification d'une batterie approuvée pour recyclage à un système de gestion d'entreprises de recyclage via le réseau (40), et mémoriser un code d'identification de batterie contenu dans un message de certification d'entreposage de batterie dans une base de données de gestion de suivi de recyclage à mettre en correspondance avec un code d'identification d'une entreprise de recyclage lorsque le message de certification de l'entreposage de batterie contenant l'identification d'une batterie recyclée est reçu du système de gestion d'entreprises de recyclage.

2. Système de service de plate-forme (10) pour une gestion intégrée de batterie selon la revendication 1,
où les informations sur le score de recyclage prédéfinies pour chaque SOH définissent un score de recyclage pour chaque zone SOH.

3. Système de service de plate-forme (10) pour une gestion intégrée de batterie selon la revendication 2,
où le score de recyclage comprend un score de recyclage de voitures d'occasion, un score de recyclage de système de stockage d'énergie, ESS, et un score de récupération de ressources.

4. Système de service de plate-forme (10) pour une gestion intégrée de batterie selon la revendication 1,
où le système de gestion d'entreprises de recyclage est un système de gestion ESS (61) ou un système de gestion de récupération de ressources (62).

5. Système de service de plate-forme (10) pour une gestion intégrée de batterie selon la revendication 1,
où le module de gestion SOH (22) est configuré pour calculer un SOH de la batterie à partir de données caractéristiques de nouvelle batterie mémorisées dans la base de données caractéristiques de batterie (31) et mémoriser le SOH de manière cumulative dans la base de données d'historique de SOH (32), et
le module de gestion de score de recyclage (23) est configuré pour déterminer un score de recyclage correspondant à un dernier SOH, comparer le score de recyclage avec un score de recyclage précédent et transmettre les informations de modification du score de recyclage au client (50) via le réseau (40) lorsque le score de recyclage est modifié.

6. Système de service de plate-forme (10) pour une gestion intégrée de batterie selon la revendication 1,
où le client (50) est un programme installé dans un dispositif de diagnostic de batterie (51) ou un terminal portable d'un utilisateur (52).

7. Système de service de plate-forme (10) pour une gestion intégrée de batterie selon la revendication 1,
où le module de gestion de données (21) est configuré pour collecter périodiquement des données caractéristiques de batterie contenant un profil de tension et/ou un profil de courant en fonction du SOH d'une batterie recyclée en provenance d'un système de gestion ESS (61) via le réseau (40), et mémoriser les données caractéristiques de batterie dans la base de données caractéristiques de batterie (31) à mettre en correspondance avec le code d'identification de la batterie recyclée,
le module de gestion SOH (22) est configuré pour calculer un SOH actuel de la batterie recyclée en analysant les données caractéristiques de la batterie recyclée, et mémoriser le SOH actuel dans la base de données d'historique de SOH (32) à mettre en correspondance avec le code d'identification de batterie recyclée, et
le module de gestion de score de recyclage (23) est configuré pour recevoir une demande de calcul de score de recyclage du système de gestion ESS (61) via le réseau (40) avec le code d'identification de batterie de la batterie recyclée, déterminer un SOH actuel en interrogeant la base de données d'historique de SOH (32) au moyen du code d'identification de la batterie recyclée, déterminer un score de recyclage correspondant au SOH actuel en référence aux informations prédéfinies sur le score de recyclage pour chaque SOH et mémoriser le score de recyclage dans la base de données de gestion des scores de recyclage (33), et transmettre les informations sur le score de recyclage au système de gestion ESS (61).

8. Système de service de plate-forme pour une gestion intégrée de batterie selon la revendication 7,
où le module de gestion SOH (22) est configuré pour calculer un SOH de la batterie à partir de données caractéristiques de la nouvelle batterie mémorisées dans la base de données caractéristiques de batterie et mémoriser cumulativement le SOH dans la base de données d'historique de SOH (32), et
le module de gestion de score de recyclage (23) est configuré pour déterminer un score de recyclage correspondant à une dernière SOH, comparer le score de recyclage avec un score de recyclage précédent et transmettre les informations de changement de score de recyclage au système de gestion ESS (61) via le réseau (40) lorsque la teneur en recyclage est modifiée.

9. Système de service de plate-forme pour une gestion intégrée de batterie selon la revendication 1, comprenant en outre :
un module de gestion de valeur résiduelle (25) configuré pour recevoir une demande d'évaluation de valeur résiduelle de la batterie provenant d'un système de transactions de batterie (63) ou d'un système de compagnies d'assurance (64) via le réseau (40), avec le code d'identification de batterie, déterminer un SOH actuel de la batterie en interrogeant la base de données d'historique de SOH (32) au moyen du code d'identification de batterie, déterminer une valeur résiduelle de la batterie en référence aux informations de valeur résiduelle prédéfinies pour chaque SOH, et transmettre la valeur résiduelle de batterie au système de transactions de batterie (63) ou au système de compagnies d'assurance (64).

10. Système de service de plate-forme (10) pour une gestion intégrée de batterie selon la revendication 9,
où le module de gestion de valeur résiduelle (25) est configuré pour mémoriser des informations de tarification de transaction contenant un code d'identification du système de transactions de batterie (63) ou du système de compagnies d'assurance (64) auquel la valeur résiduelle de batterie est transmise, un horodatage représentant le moment de transmission et des frais de tarification dans une base de données de tarification (36).

11. Procédé de service de plateforme pour une gestion intégrée de batterie, comprenant :
(a) la collecte de données caractéristiques de batterie d'un véhicule électrique via un réseau (40) et la mémorisation (S20) de manière cumulative des données caractéristiques de batterie dans une base de données caractéristiques de batterie (31) à mettre en correspondance avec un code d'identification de batterie ;
(b) le calcul (S70) d'un état de santé, SOH, lequel est un SOH actuel d'une batterie, en analysant les données caractéristiques de batterie et en mémorisant le SOH dans une base de données d'historique de SOH (32), à mettre en correspondance avec le code d'identification de batterie ;
(c) la réception d'une demande de calcul du score de recyclage d'un client (50) via le réseau (40) ainsi que le code d'identification de batterie ;
(d) la recherche, dans la base de données d'historique de SOH (32), du code d'identification de batterie afin de déterminer un SOH actuel, déterminer (S210) un score de recyclage correspondant au SOH actuel en référence aux informations prédéfinies sur le score de recyclage pour chaque SOH et mémoriser (S120) le score dans une base de données de gestion des scores de recyclage (33),
(e) la transmission (S130) des informations sur le score de recyclage au client (50) ;
(f) la réception d'un message d'approbation de recyclage de la batterie par le client (50) via le réseau (40) ;
(g) la transmission (S150) des informations de recyclage de batterie contenant le code d'identification d'une batterie approuvée pour recyclage à un système de gestion d'entreprises de recyclage via le réseau (50) ; et
(h) la mémorisation (S180) d'un code d'identification de batterie contenu dans un message de certification d'entreposage de batterie dans une base de données de gestion de suivi de recyclage (35) à mettre en correspondance avec un code d'identification d'une entreprise de recyclage lorsque le message de certification de l'entreposage de batterie contenant l'identification d'une batterie recyclée est reçu du système de gestion d'entreprises de recyclage.

12. Procédé de service de plateforme pour une gestion intégrée de batterie selon la revendication 11,
où les informations sur le score de recyclage prédéfinies pour chaque SOH définissent un score de recyclage pour chaque zone SOH, et
le score de recyclage comprend un score de recyclage de voitures d'occasion, un score de recyclage d'ESS, et un score de récupération de ressources.

13. Procédé de service de plateforme pour une gestion intégrée de batterie selon la revendication 11, comprenant en outre :
le calcul du dernier SOH de la batterie à partir de données caractéristiques de nouvelle batterie mémorisées dans la base de données caractéristiques de batterie (31) et la mémorisation du dernier SOH de manière cumulative dans la base de données d'historique de SOH (32) ; et
la détermination (S210) d'un score de recyclage correspondant au dernier SOH, la comparaison (S220) du score de recyclage avec un score de recyclage précédent et la transmission (S230) des informations de modification du score de recyclage au client (50) via le réseau (40) lorsque le score de recyclage est modifié.

14. Procédé de service de plateforme pour une gestion intégrée de batterie selon la revendication 11, comprenant en outre :
la collecte périodique des données caractéristiques de batterie contenant un profil de tension et/ou un profil de courant en fonction du SOH d'une batterie recyclée en provenance d'un système de gestion ESS via le réseau (40), et la mémorisation (S20) des données caractéristiques de batterie dans la base de données caractéristiques de batterie (31) à mettre en correspondance avec le code d'identification de la batterie recyclée ;
le calcul (S70) d'un SOH actuel de la batterie recyclée en analysant les données caractéristiques de la batterie recyclée, et la mémorisation du SOH actuel dans la base de données d'historique de SOH (32) à mettre en correspondance avec le code d'identification de batterie recyclée ; et
la réception d'une demande de calcul de score de recyclage du système de gestion ESS via le réseau (40) avec le code d'identification de batterie de la batterie recyclée, la détermination (S100) d'un SOH actuel en interrogeant la base de données d'historique de SOH (32) au moyen du code d'identification de la batterie recyclée, la détermination (5110) d'un score de recyclage correspondant au SOH actuel en référence aux informations prédéfinies sur le score de recyclage pour chaque SOH et la mémorisation (S120) du score de recyclage dans la base de données de gestion des scores de recyclage (33), et la transmission des informations sur le score de recyclage au système de gestion ESS.

15. Procédé de service de plateforme pour une gestion intégrée de batterie selon la revendication 11, comprenant en outre :
la réception d'une demande d'évaluation de valeur résiduelle de la batterie provenant d'un système de transactions de batterie (63) ou d'un système de compagnies d'assurance (64) via le réseau (40), avec le code d'identification de batterie ;
la détermination (S260) d'un SOH actuel de la batterie en interrogeant la base de données d'historique de SOH (32) au moyen du code d'identification de batterie ; et
la détermination (S270) d'une valeur résiduelle de la batterie en référence aux informations de valeur résiduelle prédéfinies pour chaque SOH, et la transmission (S280) de la valeur résiduelle de batterie au système de transactions de batterie (63) ou au système de compagnies d'assurance (64).

16. Procédé de service de plateforme pour une gestion intégrée de batterie selon la revendication 15, comprenant en outre :
la mémorisation (S290) des informations de tarification de transaction contenant un code d'identification du système de transactions de batterie (63) ou du système de compagnies d'assurance (64) auquel la valeur résiduelle de batterie est transmise, un horodatage représentant le moment de transmission et des frais de tarification dans une base de données de tarification (36).
